# EUROPÄISCHE PATENTSCHRIFT

(11) **EP 2 147 261 B1**
(45) Veröffentlichungstag und Bekanntmachung des Hinweises auf die Patenterteilung: **13.08.2014**
(21) Anmeldenummer: 08734474.3
(22) Anmeldetag: 04.04.2008
(51) Int. Cl.: F24J 2/52, H01L 31/042, H01L 31/048

(54) **VERBINDBARE MONTAGEPROFILSCHIENE (GRUNDSCHIENE)**
CONNECTABLE PROFILED MOUNTING RAIL (BASE RAIL)
RAIL DE MONTAGE PROFILÉ À ASSEMBLER (RAIL DE BASE)

(30) Priorität: 19.04.2007 DE 202007006021 U
(43) Veröffentlichungstag der Anmeldung: 27.01.2010
(73) Patentinhaber: Mounting Systems GmbH, 15834 Rangsdorf (DE)
(72) Erfinder: SCHNITZER, Sandy, 15834 Rangsdorf (DE)
(74) Vertreter: Kietzmann, Manfred
(86) Internationale Anmeldenummer: PCT/DE2008/000593
(87) Internationale Veröffentlichungsnummer: WO 2008/128507

(56) Entgegenhaltungen:
- EP-A- 0 540 982
- EP-A- 1 624 127
- WO-A-2004/018883
- DE-U1-202005 000 484
- FR-A- 2 258 502
- FR-A- 2 885 149

## Beschreibung

Die Erfindung betrifft eine Montageprofilschiene insbesondere zur Befestigung von Solarmodulen.

Aus der DE 20 2005 000 484 U1 ist ein Montagesystem zur Befestigung von Solarmodulen bekannt, das mindestens zwei beabstandet angeordnete Montageprofilschienen mit jeweils einer die Profilhöhe begrenzenden Auflage für den oder die Module, sowie einen unterhalb der Auflage befindlichen Anschluss für die Dachbefestigung aufweist. Die Montageprofilschiene ist seitlich oder seitlich und unten mit Profilen versehen, die mit Profilen einer Verbindungsprofilschiene verbindbar sind, wobei zwischen den beiden Profilen nach dem Zusammenfügen Formschluss an mindestens zwei Punkten besteht und eine kraftschlüssige Verbindung herstellbar ist, wobei die Verbindungsprofilschiene nach hergestelltem Formschluss mit der Profilhöhe der Montageprofilschiene oben abschließt, die mechanische Belastbarkeit der Verbindungsprofilschiene der der Montageprofilschiene angenähert oder gleich ist und der Formschluss zwischen den Profilen der Montageprofilschiene und der Verbindungsprofilschiene durch Ineinanderschieben erfolgt.

Mit dem dargelegten grundsätzlichen Aufbau wird es ermöglicht, Montageprofilschienen mit Standardlängen wie z. B. 2,95 m oder 6 m einzusetzen und das fehlende Stück am Ende durch eine Verbindungsprofilschiene zu ersetzen. Da die Verbindung der beiden Schienen flexibel ist, wird eine exakte Bemaßung des Traggerüstes gewährleistet. Auf die Verbindungsprofilschiene sind Abschnitte der Montageprofilschiene aufsetz- oder aufschiebbar, so dass auch hinsichtlich der Befestigung der Solarmodule bzw. der Dachbefestigung systemgleich weitergearbeitet werden kann.

Nachteilig bei dieser Anordnung ist, dass zwei unterschiedliche Profile für die Montageprofilschienen und die Verbindungsprofilschienen zum Einsatz kommen.

Aus der FR 2 885 149 A ist ein Träger bekannt, der die Mantellinie überragende Anschlussprofile aufweist, in die ein um 180° gedrehter Träger einschiebbar ist.

Die FR 2 258 502 A und die EP 1 624 127 B1 beschreiben Stützen oder Profile, die um 180° gedreht zusammensetzbar sind, wobei kein oder nur Formschluss in eine Richtung erzielt wird.

Aufgabe der Erfindung ist es, hier zu einer Vereinheitlichung zu kommen. Gelöst wird diese Aufgabe mit den Merkmalen des Anspruches 1, vorteilhafte Ausgestaltungen sind Gegenstand der Unteransprüche.

Erfindungsgemäß ist als verbindbare Montageprofilschiene, die Längsstege zum Anschluss von zu montierenden Elementen besitzt, eine solche vorgesehen, deren Grundprofil eine unterbrochene im wesentlichen rechteckige Mantellinie aufweist, wobei auf der einen Seite eine Anschlussprofilierung für Befestigung der Montageprofilschiene z.B. an einem Bauwerk vorhanden ist und auf der gegenüberliegenden Seite Anschlussprofile so strukturiert angeordnet sind, dass eine zweite Montageprofilschiene mit dem selben Profilquerschnitt und um 180° um die Montageprofilschienelängsachse gedreht durch Ineinanderschieben der Anschlussprofile formschlüssig mit der ersten Montageprofilschiene verbindbar ist, wobei die Anschlussprofile gemessen von der Seitlichen Mantellinie die gleiche Höhe (h) aufweisen und der Formschluss nur eine Verschiebung in Montageprofilschienenlängsrichtung zuläßt. Dabei werden die Anschlussprofile analog den Längsstegen bevorzugt über die Montageprofilschienenlänge ausgeführt.

Auf diese Weise lässt sich die erste Montageschiene mit Seitenversatz verlängern oder durch das Einschieben einer dritten Montageprofilschiene mit dem selben Profilquerschnitt in die zweite Montageprofilschiene, die erste Montageprofilschiene ohne Profilversatz, also fluchtend fortführen.

Wenn die zweite Montageprofilschiene nur als Verbindungsstück zwischen der ersten und der dritten Montageprofilschiene dient, kann sie auch entsprechend kurz ausgeführt werden.

Ebenso ist es möglich, in die zweite Montageprofilschiene nur kurze Formstücke mit dem selben Profil einzuschieben, um mit der ersten Montageprofilschiene fluchtende Befestigungsstellen zu erhalten, auf denen der jeweilige Solarmodul dann aufliegt.

Im Gegensatz zum Stand der Technik werden mit der vorgeschlagenen Lösung nur noch Profilschienen mit einem Profilquerschnitt benötigt, um beliebige Längen von Montageprofilschienen z.B. bei der Montage von Sonnenkollektoren zu realisieren oder über eine Montageprofilschiene hinausgehende fluchtende Befestigungs- und Auflagepunkte zu erhalten.

Durch einfache Querverschraubungen lässt sich dann auch eine Längsverschiebung der über die Anschlussprofile bereits formschlüssig verbundenen Montageprofilschienen und/oder Formstücke unterbinden.

In einer vorteilhaften Ausführung ist ferner vorgesehen, dass die formschlüssig ineinandergeschobenen Montageprofilschienen oben eine gemeinsame glatte Auflagefläche bilden.

Sowohl unter fertigungstechnischen Aspekten der Strangpressung der Montageprofilschienen als auch der Passgenauigkeit und der. Festigkeit weisen die Formschluss bildenden Anschlussprofile eine schiefwinklige Führung aufweisen, vorzugsweise eine doppelseitige Schwalbenschwanzführung. Dabei hat es sich bewährt, wenn bei der verbindbaren Montageprofilschiene die Anschlussprofile entlang der Mantellinie wechseln zwischen einem stegaufnehmenden Profil und einem Steg.

Die Montageprofilschiene soll am Beispiel einer Solarmodulmontage in einem Ausführungsbeispiel erläutert werden.

Es zeigen:
- **Fig. 1:**: eine Montageprofilschiene
- **Fig. 2:**: zwei zusammengesetzte Montageprofilschienen und
- **Fig. 3:**: die Führung im Detail.

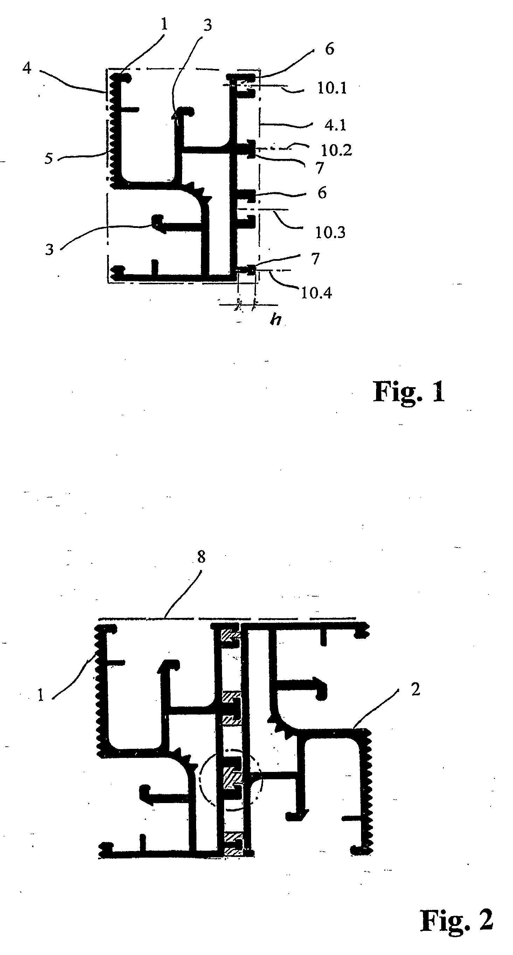

Die in **Fig. 1** dargestellte Montageprofilschiene 1 weist ein stegartig zusammengesetztes Profil mit im wesentlichen rechteckiger Mantelprofillinie 4 auf. In der Zeichnung wurde diese unter dem Gesichtspunkt der Sichtbarkeit etwas außerhalb des Profils eingezeichnet. Die Längsstege (einige sind mit 3 gekennzeichnet) verlaufen über die gesamte Montageprofillänge bei diesen im Strangpressverfahren hergestellten Montageprofilschienen 1. Die Stege 3 dienen zur Aufnahme von Befestigungselementen für die Solarmodule. Auf der einen Seite weist die Montageprofilschiene 1 eine Anschlussprofilierung für ein Befestigungselement zur Herstellung einer Verbindung zu Dachteilen oder anderen Bauwerksteilen auf.

Auf der gegenüberliegenden Seite sind die Anschlussprofile 6, 7 so strukturiert angeordnet, dass eine zweite Montageprofilschiene 2 mit dem selben Profilquerschnitt und um 180° gedreht durch Ineinanderschieben der Anschlussprofile 6, 7 formschlüssig mit der ersten Montageprofilschiene 1 verbindbar ist.

Diese Anschlussprofile zeichnen sich dadurch aus, dass
- die formschlüssig ineinandergeschobenen Montageprofilschienen 1, 2 oben eine gemeinsame glatte Auflagefläche 8 bilden,
- alle oder einige Formschluss bildenden Anschlussprofile 6, 7 eine schiefwinklige Führung 9 aufweisen, vorzugsweise eine doppelseitige (Schwalbenschwanzführung),
- die Führung 9 und die Anschlussprofile 6, 7 bezogen auf jeweils eine Senkrechte 10.1-n zur seitlichen Mantellinie 4.1 spiegelgleiche Hälften aufweisen und
- der Abstand zwischen benachbarten Senkrechten 10.1-10.2, 10.2-10.3 gleich ist.

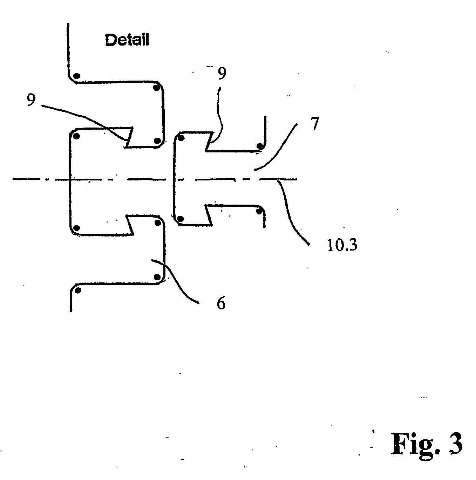

Eine mittels dieser Anschlussprofile 6, 7 hergestellte Verbindung von zwei Montageprofilschienen 1, 2 ist in **Fig. 2** dargestellt. Die schraffierten Profile sind dabei Bestandteil der Montagprofilschiene 2. Eine Detailansicht einer solchen durch das Ineinanderschieben hergestellten Führung 9 enthält **Fig. 3**.

Dadurch, dass die Anschlussprofile 6, 7 gemessen von der seitlichen Mantellinie 4.1 die gleiche Höhe (h) aufweisen, liegen die beiden Montagprofilschienen 1, 2 gut aneinander an und sind durch eine Querverschraubung auch gegen eine Längsverschiebung fixierbar.

### Bezugszeichenliste

- 1: Montageprofilschiene
- 2: Montageprofilschiene
- 3: Längssteg
- 4: Mantellinie
- 4.1: Mantellinie
- 5: Anschlussprofilierung
- 6: Anschlussprofil stegaufnehmend
- 7: Anschlussprofil Steg
- 8: Auflagefläche
- 9: Führung
- 10: Senkrechte

## Patentansprüche

1. Verbindbare Montageprofilschiene, die Längsstege (3) zum Anschluss von zu montierenden Elementen besitzt, wobei das Grundprofil eine unterbrochene im wesentlichen rechteckige Mantellinie (4) aufweist, wobei
- auf der einen Seite eine Anschlussprofilierung (5) für eine Befestigung der Montageprofilschiene (1) vorhanden ist,
**dadurch gekennzeichnet dass**
- auf der gegenüberliegenden Seite Anschlussprofile (6, 7) so strukturiert angeordnet sind, dass eine zweite Montageprofilschiene (2) mit dem selben Profilquerschnitt und um 180° um die Montageprofilschienelängsachse gedreht durch Ineinanderschieben der Anschlussprofile (6, 7) formschlüssig mit der ersten Montageprofilschiene (1) verbindbar ist, wobei die Anschlussprofile (6, 7) gemessen von der seitlichen Mantellinie (4.1) die gleiche Höhe (h) aufweisen und der Formschluss nur eine Verschiebung in Montageprofilschienenlängsrichtung zulässt.

2. Verbindbare Montageprofilschiene nach Anspruch 1, **dadurch gekennzeichnet, dass**
die Anschlussprofile (6, 7) sich über die Montageprofilschienenlänge erstrecken.

3. Verbindbare Montageprofilschiene nach Anspruch 1 oder 2, **dadurch gekennzeichnet, dass** die Montageprofilschiene (1,2) derart ausgebildet ist, dass beim formschlüssigen Ineinanderschieben zweier Montageprofilschienen (1, 2) oben eine gemeinsame glatte Auflagefläche (8) gebildet wird.

4. Verbindbare Montageprofilschiene nach einem der Ansprüche 1 bis 3, **dadurch gekennzeichnet, dass**
alle oder einige Formschluss bildenden Anschlussprofile (6, 7) eine schiefwinklige Führung (9) aufweisen, vorzugsweise eine doppelseitige Schwalbenschwanzführung.

5. Verbindbare Montageprofilschiene nach Anspruch 4, **dadurch gekennzeichnet, dass**
die Führung (9) und die Anschlussprofile (6, 7) bezogen auf jeweils eine Senkrechte (10.1-n) zur seitlichen Mantellinie (4.1) spiegelgleiche Hälften aufweist.

6. Verbindbare Montageprofilschiene nach Anspruch 5, **dadurch gekennzeichnet, dass**
der Abstand zwischen benachbarten Senkrechten (10.1-10.2, 10.2-10.3) gleich ist.

7. Verbindbare Montageprofilschiene nach einem der Ansprüche 1 bis 6, **dadurch gekennzeichnet, dass**
die Anschlussprofile (6, 7) wechseln zwischen einem stegaufnehmenden Profil (6) und einem Steg (7).

## Claims

1. A connectable profiled mounting rail comprising longitudinal webs (3) for connecting elements to be mounted, i wherein the basic profile has a discontinuous, essentially rectangular surface line (4), wherein
- on one side, a connection profile (5) for attachment of the profiled mounting rail (1) is provided,
**characterized in that**
- on the opposite side, connection profiles (6, 7) are arranged in a manner structured such that a second profiled mounting rail (2) having the same profile cross-section and being rotated through 180° about the longitudinal axis of the profiled mounting rail can be connected to the first profiled mounting rail (1) with a form fit by sliding the connection profiles (6, 7) one inside the other, wherein the connection profiles (6, 7) have the same height (h) measured from the lateral surface line (4.1) and the form fit permits only a displacement in the longitudinal direction of the profiled mounting rail.

2. The connectable profiled mounting rail according to claim 1, **characterized in that**
the connection profiles (6, 7) extend over the length of the profiled mounting rail.

3. The connectable profiled mounting rail according to claim 1 or 2, **characterized in that**
the profiled mounting rail (1, 2) is designed such that, when two profiled mounting rails (1, 2) are slid one inside the other with a form fit, a common smooth support surface (8) is formed at the top.

4. The connectable profiled mounting rail according to any of claims 1 to 3, **characterized in that**
all or some connection profiles (6, 7) forming a form fit have an oblique-angled guide (9), preferably a double-sided dovetail guide.

5. The connectable profiled mounting rail according to claim 4, **characterized in that**
the guide (9) and the connection profiles (6, 7) have mirror-image halves relative to a perpendicular (10.1-n) to the lateral surface line (4.1) in each case.

6. The connectable profiled mounting rail according' to claim 5, **characterized in that**
the distance between adjacent perpendiculars (10.1-10.2, 10.2-10.3) is the same.

7. The connectable profiled mounting rail according to any of claims 1 to 6, **characterized in that**
the connection profiles (6, 7) alternate between a web-receiving profile (6) and a web (7).

## Revendications

1. Rail profilé de montage pouvant être raccordé, qui possède des nervures longitudinales (3) pour la jonction d'éléments à monter, le profilé de base présentant une génératrice (4) continue essentiellement rectangulaire,
- un profilage de jonction, (5) existant sur un côté pour une fixation du rail profilé de montage (1),
**caractérisé en ce que**
- sur le côté opposé sont disposés des profilés de jonction (6, 7) structurés de telle sorte qu'un deuxième rail profilé de montage (2) ayant la même section transversale de profilé et tourné de 180° autour de l'axe longitudinal du rail de profilé de montage peut être raccordé par liaison de forme au premier rail profilé de montage (1) par emboitement des profilés de jonction (6, 7), les profilés de jonction (6, 7), mesurés à partir de la génératrice latérale (4.1), présentant la même hauteur (h) et la liaison de forme permettant seulement un déplacement dans la direction longitudinale de rails profilés de montage.

2. Rail profilé de montage pouvant être raccordé, selon la revendication 1, **caractérisé en ce que**
les profilés de jonction (6, 7) s'étendent sur la longueur de rails profilés de montage.

3. Rail profilé de montage pouvant être raccordé, selon la revendication 1 ou 2, **caractérisé en ce que** le rail profilé de montage (1, 2) est constitué de telle sorte que, lors de l'emboitement par liaison de forme de deux rails profilés de montage (1, 2), il est formé en haut une surface d'appui (8) lisse commune.

4. Rail profilé de montage pouvant être raccordé, selon une des revendications 1 à 3, **caractérisé en ce que**
tous ou quelques-uns des profilés de jonction (6, 7) formant la liaison de forme présentent un guidage oblique, de préférence un guidage en queue d'aronde des deux côtés.

5. Rail profilé de montage pouvant être raccordé, selon la revendication 4, **caractérisé en ce que**
le guidage (9) et les profilés de jonction (6, 7) présentent, par rapport à respectivement une verticale (10.1-n), des moitiés symétriques relativement à la génératrice latérale (4.1).

6. Rail profilé de montage pouvant être raccordé, selon la revendication 5, **caractérisé en ce que**
la distance entre des verticales voisines (10.1-10.2, 10.2-10.3) est identique.

7. Rail profilé de montage pouvant être raccordé, selon une des revendications 1 à 6, **caractérisé en ce que**
les profilés de jonction (6, 7) alternent entre un profilé (6) logeant des nervures et une nervure (7).
